# EUROPÄISCHE PATENTANMELDUNG

(11) **EP 3 360 651 A1**
(43) Veröffentlichungstag der Anmeldung: **15.08.2018**
(21) Anmeldenummer: 17206019.6
(22) Anmeldetag: 07.12.2017
(51) Int. Cl.: B25J 5/02, B25J 9/16, B05B 13/02

(54) **HANDHABUNGSROBOTER UND VERFAHREN ZUR ANSTEUERUNG EINES HANDHABUNGSROBOTERS**

(30) Priorität: 08.02.2017 DE 102017102423
(71) Anmelder: Eisenmann SE, 71032 Böblingen (DE)
(72) Erfinder: Schwab, Stephan, 71111 Waldenbuch (DE); Salomon, Mirjam, 72218 Wildberg (DE); Jochen Maurer, Jochen, 71083 Herrenberg (DE)
(74) Vertreter: Ostertag & Partner Patentanwälte mbB

(57) **Zusammenfassung**

Die Erfindung betrifft einen Handhabungsroboter(10) für eine Beschichtungskabine zur Beschichtung von Gegenständen wie Fahrzeugkarosserien oder Fahrzeugbauteile, wobei die Beschichtungskabine eine Fördertechnik für einen Transport der zu beschichtenden Gegenstände aufweist und wobei der Handhabungsroboter eine bewegbare Basis (22), einen Effektor(32) sowie mindestens drei Bewegungsachsen (A,B,C) aufweist, wobei eine erste Achse als Translationsachse an der Basis im Bereich der Fördertechnik (13) angeordnet ist und eine zweite Achse als Rotationsachse und eine dritte Achse als Translationsachse zwischen der Basis und dem Effektor angeordnet sind.

Die Erfindung betrifft außerdem ein Verfahren zur Ansteuerung eines solchen Handhabungsroboters, ein Verfahren zur Beschichtung von Gegenständen mit einem solchen Handhabungsroboter sowie eine Beschichtungsanlage mit einem solchen Handhabungsroboter.

## Beschreibung

### HINTERGRUND DER ERFINDUNG

### 1. Gebiet der Erfindung

Die Erfindung betrifft einen Handhabungsroboter für eine Beschichtungskabine zur Beschichtung von Gegenständen wie Fahrzeugkarosserien oder Fahrzeugbauteile sowie ein Verfahren zur Ansteuerung eines Handhabungsroboters.

### 2. Beschreibung des Standes der Technik

Auf dem Gebiet der Applikationstechnik, insbesondere der Oberflächenbehandlung und Beschichtung von Gegenständen spielt neben der Sicherung einer hohen Qualität und der Senkung der Stückkosten die Taktgeschwindigkeit eine wichtige Rolle. Beispielsweise bei der Lackapplikation wird der zu lackierende Gegenstand, beispielsweise eine Fahrzeugkarosserie, durch eine Lackierkabine mittels einer Fördertechnik bewegt. Dabei kommen als Förderarten regelmäßig ein Stop-and-Go-Verfahren oder ein kontinuierliches Fördern des zu behandelnden Gegenstandes durch die Lackierkabine zum Einsatz. Bei einem Stop-and-Go-Verfahren wird der zu lackierende Gegenstand in die Lackierkabine hineinbewegt und ruht während des Behandlungs- bzw. des Lackiervorgangs. Bei einem kontinuierlichen Fördern bewegt sich der zu behandelnde Gegenstand während des Behandlungsvorgangs mit einer kontinuierlichen Geschwindigkeit durch die Lackierkabine.

In beiden Fällen werden heutzutage Mehrachsroboter eingesetzt, die eine Behandlungseinrichtung wie beispielsweise einen Hochrotationszerstäuber tragen, um den Gegenstand zu behandeln. Da zu lackierende Fahrzeugkarosserien in der Regel seitliche Türen sowie eine Heckklappe und eine Motorhaube aufweisen, kann die Beschichtungseinrichtung den Innenraum der Karosserie nur erreichen, wenn die Türen sowie die Heckklappe und die Motorhaube geöffnet bzw. angehoben sind. Für diese Öffnungs- und Schließvorgänge werden sogenannte Handhabungsroboter eingesetzt. Ein solcher Handhabungsroboter öffnet beispielsweise eine Motorhaube und hält sie in einem geöffneten Zustand, während ein Mehrachsroboter mit der Beschichtungseinrichtung den von der geöffneten Motorhaube aus erreichbaren Innenraum der Karosserie lackiert. Nach dem Lackiervorgang kann es erforderlich sein, die Motorhaube oder die Heckklappe noch für einen gewissen Zeitraum offenzuhalten, bis eine erste Antrocknung der Beschichtung erfolgt ist.

Befindet sich die Basis des Handhabungsroboters unterhalb oder auf gleicher Höhe mit der Unterkante des zu behandelnden Gegenstands und gleichzeitig neben dem zu behandelnden Gegenstand, befindet sich für den Offenhalte-Vorgang zwangsläufig ein Teil des Handhabungsroboters vor einer zu behandelnden Oberfläche der Fahrzeugkarosserie. Während dieses Offenhalte-Zeitraums ist durch den Handhabungsroboter ein bestimmter Fahrweg um die Fahrzeugkarosserie belegt und ein Teil der zu behandelnden Oberfläche abgedeckt, so dass eine Beschichtung des restlichen Teils der Fahrzeugkarosserie nicht oder nur eingeschränkt möglich ist.

Es sind Konzepte bekannt, bei denen Handhabungsroboter für das Öffnen und Schließen der Motorhaube und der Heckklappe hängend oberhalb der Fahrzeugkarosserie angebracht sind. Dieses Konzept verringert eine mögliche Verstellung des Fahrwegs für einen Mehrachsroboter. Es erhöht aber gleichzeitig das Risiko einer Verschmutzung des zu behandelnden Gegenstands durch herabfallende Schmutzpartikel.

### ZUSAMMENFASSUNG DER ERFINDUNG

Es ist eine Aufgabe der Erfindung, einen Handhabungsroboter sowie ein Verfahren zur Ansteuerung eines solchen Handhabungsroboters anzugeben, das die geschilderten Nachteile vermeidet und insbesondere eine möglichst flexible und einfache Kinematik für einen derartigen Handhabungsroboter angibt.

Diese Aufgabe wird durch einen Handhabungsroboter gemäß dem unabhängigen Anspruch 1 gelöst. Weitere Ausgestaltungen sind in den abhängigen Ansprüchen angegeben.

Bei dem erfindungsgemäßen Handhabungsroboter für eine Beschichtungskabine zur Beschichtung von Gegenständen wie Fahrzeugkarosserien oder Fahrzeugbauteile weist die Beschichtungskabine eine Fördertechnik für einen Transport der zu beschichtenden Gegenstände auf. Bei der Fördertechnik kann es sich beispielsweise um eine sogenannte Skid-Technologie handeln, bei der die zu behandelnden Gegenstände auf sogenannten Skids befestigt werden und mittels dieser Skids durch den Beschichtungsprozess gefördert werden. Alternativ können die zu behandelnden Gegenstände auch direkt ohne die genannten Skids auf einer Fördertechnik befestigt werden.

Erfindungsgemäß ist vorgesehen, dass der Handhabungsroboter eine bewegbare Basis, einen Effektor sowie mindestens drei Bewegungsachsen aufweist. Bei der Basis handelt es sich gewissermaßen um den Befestigungspunkt des Handhabungsroboters, an dem die gesamte Kinematik, also der Manipulator oder Roboterarm befestigt ist. Unter dem Effektor wird vorliegend beispielsweise eine Greif- oder Hubeinrichtung verstanden, die beispielsweise für ein Anheben oder Absenken einer Motorhaube oder einer Heckklappe eingerichtet ist.

Eine erste Achse der drei Bewegungsachsen ist als Translationsachse ausgelegt. Dies bedeutet, dass mit dieser Translationsachse im Wesentlichen eine lineare Bewegung ausführbar ist. Diese erste Achse ist an der Basis angeordnet und kann beispielsweise die Basis linear bewegen, d.h. beispielsweise den Manipulator des Handhabungsroboters linear verschieben. Der Begriff linear soll hier nicht so ausgelegt werden, dass die Bewegung streng entlang einer mathematischen Geraden zu erfolgen hat. Vielmehr sollen von dem Begriff "lineare Bewegung" auch solche Bewegungen umfasst sein, die beispielsweise entlang einer Steuerkurve erfolgen und somit nicht entlang einer streng mathematischen Gerade, sondern vielmehr entlang einer Kurve verlaufen.

Eine zweite Achse der drei Bewegungsachsen ist als Rotationachse ausgelegt und zwischen der Basis und dem Effektor angeordnet. Eine dritte der drei Bewegungsachsen ist wiederum als Translationsachse in dem bereits weiter oben erläuterten Sinne ausgelegt und ebenfalls zwischen der Basis und dem Effektor angeordnet.

Selbstverständlich kann der Handhabungsroboter mehr als die genannten drei Bewegungsachsen aufweisen. Die genannte Kombination aus einer Translationsachse an der Basis sowie einer Rotations- und einer Translationsachse zwischen der Basis und den Effektor ermöglicht eine Kompensation einer Bewegung der Basis entlang der ersten Bewegungsachse, also der Translationsachse mittels Bewegungen um/entlang der zweiten und dritten Achse. Auf diese Weise kann eine seitliche Überdeckung eines Teils des zu behandelnden Gegenstands durch den Handhabungsroboter über eine kombinierte Bewegung der genannten drei Achsen verändert und damit für eine Behandlung des Gegenstands durch einen Mehrachsroboter zugänglich gemacht werden. Somit kann ein erfindungsgemäßer Handhabungsroboter einerseits neben/unterhalb eines zu behandelnden Gegenstands angebracht/angeordnet sein und somit nicht den zu behandelnden Gegenstand dem Risiko von herabfallenden Schmutzpartikeln aussetzen. Andererseits können so trotzdem die seitlichen zu behandelnden Oberflächen des Gegenstands erreicht werden und einer Behandlung unterzogen werden. Dies kann beispielsweise durch eine zeitliche Abfolge erreicht werden, indem in einem ersten Schritt zunächst ein Teil der nicht von dem Handhabungsroboter überdeckten Fläche behandelt wird. In einem zweiten Schritt wird der Handhabungsroboter relativ zu dem zu behandelnden Gegenstand oder der zu behandelnde Gegenstand relativ zu dem Handhabungsroboter bewegt und es wird nun ein Teil der Oberfläche des zu behandelnden Gegenstands überdeckt, der bereits behandelt ist. Gleichzeitig wird auf diese Weise ein anderer Teil der Oberfläche des zu behandelnden Gegenstandes frei, der in dem ersten Schritt noch nicht behandelt worden war.

Bei einer bevorzugten Ausführungsform eines erfindungsgemäßen Handhabungsroboters ist vorgesehen, dass der der Handhabungsroboter so ausgelegt ist, dass Bewegungen entlang der ersten Achse, um die zweite Achse und entlang der dritten Achse so koordinierbar sind, dass bezüglich des Effektors eine Bewegung entlang der ersten Achse oder eine Bewegung des zu behandelnden Gegenstands relativ zu der Basis des Handhabungsroboters durch Bewegungen um die zweite Achse und entlang der dritten Achse kompensierbar sind. Somit kann beispielsweise die Basis entlang der ersten Achse verfahren werden oder der zu behandelnde Gegenstand relativ zu der Basis verfahren werden und über Bewegungen der zweiten und der dritten Achse erreicht werden, dass eine Position des Effektors am Anfang der Bewegung identisch mit der Position am Ende der Bewegung ist. Besonders bevorzugt ist dabei, wenn die Position an Anfang der Bewegung und die Position am Ende der Bewegung während der Bewegung im Wesentlich gehalten werden, d.h. sich während der Bewegungen nicht verändern. Somit kann eine beispielsweise von dem Effektor gehaltene Motorhaube offengehalten werden, während die Basis des Handhabungsroboters verfährt oder die Motorhaube relativ zu der Basis des Handhabungsroboters verfährt und so ein bisher noch nicht behandelter Teil der Oberfläche des zu behandelnden Gegenstands freigegeben wird.

Eine besonders bevorzugte Ausführungsform der Erfindung sieht vor, dass die zweite Achse an der Basis angeordnet ist. Somit kann ein beispielsweise notwendiger Drehantrieb platzsparend in der Basis untergebracht werden.

Weiterhin kann vorgesehen sein, dass der Effektor zum Öffnen oder/und Offenhalten oder/und zum Schließen einer Haube einer Fahrzeugkarosserie ausgelegt ist. Beispielsweise kann es sich bei der Haube um eine Motorhaube oder eine Heckklappe einer Fahrzeugkarosserie handeln.

Weiterhin kann vorteilhafterweise vorgesehen sein, dass der Handhabungsroboter in Förderrichtung des zu behandelnden Gegenstands gesehen neben dem zu beschichtenden Gegenstand angeordnet ist. Unter dem Begriff "neben" soll hier ein Bezug zu der von dem zu behandelnden Gegenstand in Förderrichtung durchfahrenen Raumvolumen verstanden werden. Es kann beispielsweise die Basis unterhalb des zu behandelnden Gegenstands angeordnet sein, aber neben der dort befindlichen Fördertechnik.

Bei einer beispielhaften Ausführungsform der Erfindung ist vorgesehen, dass die erste Achse entlang der Förderrichtung und/oder die zweite Achse senkrecht zu der Förderrichtung angeordnet sind. Ist die erste Achse entlang der Förderrichtung angeordnet, kann der Handhabungsroboter entlang der Förderrichtung des zu behandelnden Gegenstands verfahren werden. Bei einer Ausrichtung der zweiten Achse senkrecht zu der Förderrichtung kann der Manipulator entsprechend verschwenkt werden und in Kombination mit einer Bewegung der dritten Achse eine Bewegung der ersten Achse entlang der Förderrichtung kompensiert werden.

Bei einer vorteilhaften Weiterbildung der Erfindung kann vorgesehen sein, dass im Bereich der Fördertechnik eine Schutzeinhausung für den Handhabungsroboter vorgesehen ist, in welche der Handhabungsroboter bewegbar ist. Bei einer solchen Schutzeinhausung kann es sich beispielsweise um eine Klappe oder eine Art Schublade handeln, unter/in der beispielsweise der Manipulatorarm samt Effektor des Handhabungsroboters während eines Beschichtungsprozesses geschützt untergebracht werden kann.

Die Aufgabe wird auch durch ein Verfahren zur Ansteuerung eines Handhabungsroboters gemäß der Erfindung gelöst. Das Verfahren weist die Schritte auf:
Durchführen einer Bewegung des Handhabungsroboters entlang der ersten Achse;
Kompensieren der Bewegung des Handhabungsroboters entlang der ersten Achse mittels Durchführens einer Bewegung des Handhabungsroboters um die zweite Achse.

Auf diese Weise kann, wie bereits oben beschrieben, während eines Beschichtungsprozesses ein Teil der Oberfläche des zu behandelnden Gegenstands freigegeben werden, der zuvor von einem Teil des Handhabungsroboters überdeckt worden war.

Die Erfindung wird außerdem durch ein Verfahren zur Beschichtung von Gegenständen mit einem erfindungsgemäßen Handhabungsroboter sowie durch eine Beschichtungsanlage mit einem erfindungsgemäßen Handhabungsroboter gelöst.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: in einer schematischen Perspektivdarstellung eine Ausführungsform eines erfindungsgemäßen Handhabungsroboters;
- Figur 2: in einer schematischen Schnittdarstellung die Ausführungsform der Figur 2 in einer teilweise geschnittenen Frontalansicht mit einer alternativen Fördertechnik;
- Figur 3A: in einer schematischen Darstellung eine teilweise geschnittene Draufsicht einer Lackierkabine mit einem Handhabungsroboter in einer Parkstellung;
- Figur 3B: die Draufsicht der Figur 3A mit dem Handhabungsroboter in einer aktiven Stellung; und
- Figuren 4A-4C: in einer schematischen Darstellung eine teilweise geschnittene Seitenan-sicht der Lackierkabine der Figuren 3A und 3B mit verschiedenen Stellungen des Handhabungsroboters.

### BESCHREIBUNG BEVORZUGTER AUSFÜHRUNGSBEISPIELE

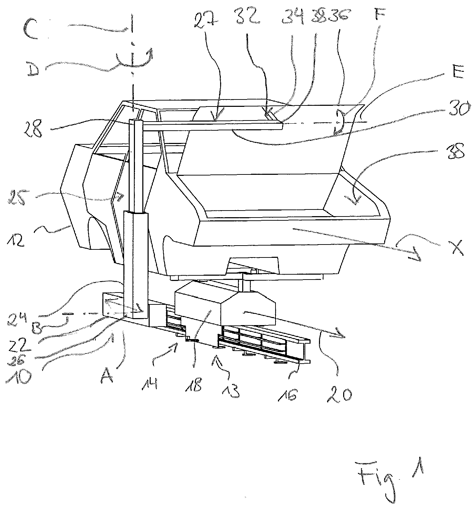

Figur 1 zeigt in einer schematischen Perspektivdarstellung eine Ausführungsform eines erfindungsgemäßen Handhabungsroboters 10. Bei der in Figur 1 dargestellten Situation innerhalb einer Behandlungseinrichtung wie beispielsweise einer Lackierkabine ist eine unterhalb des zu behandelnden Gegenstands, hier eine Fahrzeugkarosserie 12, eine Fördertechnik 13 vorgesehen. Bei der Fördertechnik handelt es sich bei der in Figur 1 gezeigten Anlage um eine Elektrobodenbahn 14. Die Elektrobodenbahn 14 fördert auf einer am Boden befestigten Schiene 16 die Fahrzeugkarosserie 12 mittels einer direkten Verbindung zwischen einem Förderfahrzeug 18 und der Fahrzeugkarosserie 12. Selbstverständlich stellt diese Anordnung nur eine beispielhafte Ausführungsform dar. Es kann zwischen der Fördereinrichtung und der Fahrzeugkarosserie 12 auch ein Zwischenträger wie beispielsweise ein Skid angeordnet sein.

Das Förderfahrzeug 18 trägt die Fahrzeugkarosserie 12 und fördert die Fahrzeugkarosserie 12 mit einer Längsachse X der Fahrzeugkarosserie 12 entlang einer Förderrichtung 20. In der Behandlungseinrichtung wie beispielsweise der erwähnten Lackierkabine ist der Handhabungsroboter 10 ebenfalls wie die Elektrobodenbahn 14 unterhalb der Fahrzeugkarosserie 12 gelagert.

Der Handhabungsroboter 10 weist eine Basis 22 auf, die beispielsweise am Boden der Behandlungseinrichtung stationär oder fahrbar gelagert ist. Ein Manipulatorarm 24 ist an einem Befestigungspunkt 26 mit der Basis 22 verbunden. Der Manipulatorarm 24 weist mehrere Bewegungsachsen auf, die nachstehend im Detail erläutert werden.

Der Manipulatorarm 24 ist gegenüber dem Boden der Beschichtungsanlage bzw. gegenüber einem feststehenden zu behandelnden Gegenstand entlang der Förderrichtung 20 entlang einer Achse A bewegbar. Diese Translationsachse A verläuft im Wesentlichen entlang einer Längsachse X der Fahrzeugkarosserie 12 und entlang der Förderrichtung A. Diese Beweglichkeit kann beispielsweise durch eine Bewegung der Basis 22 selbst entlang der Förderrichtung 20 oder durch eine Bewegung des Befestigungspunkts 26 relativ zu der Basis 22 erfolgen.

Der Manipulatorarm 24 des Handhabungsroboters 10 der Figur 1 lässt sich in ein Längssegment 25 und ein Quersegment 27 aufteilen. Das Längssegment 25 erstreckt sich neben der Elektrobodenbahn 14 und neben dem zu behandelnden Gegenstand 12. Das Quersegment 27 erstreckt sich quer zur Förderrichtung X zumindest teilweise über dem zu behandelnden Gegenstand 12. Der Manipulatorarm 24 weist eine Reihe von Bewegungsachsen auf. Der gesamte Manipulatorarm 24, also das Längssegment 25 und das Quersegment 27, ist an seinem Befestigungspunkt 26 um diesen drehbar gelagert und somit um eine Achse B schwenkbar. Die Rotationsachse B ist in der in Figur 1 gezeigten Ausführungsform rechtwinklig zu der Translationsachse A angelegt. Selbstverständlich kann je nach Einsatzfall hier auch eine andere als eine rechtwinklige Auslegung angezeigt sein.

Das Längssegment 25 erstreckt sich ausgehend von seinem Befestigungspunkt 26 im Wesentlichen entlang einer Längsachse C. Am Ende dieser Längsachse C befindet sich ein Befestigungspunkt 28, an dem ein Querarm 30 des Quersegments 27 befestigt ist. Der Befestigungspunkt 28 ist entlang der Längsachse C bewegbar, so dass das Quersegment 27 bei einer senkrechten Ausrichtung der Längsachse C in seiner Höhe bezüglich des Bodens bzw. der Fahrzeugkarosserie 12 einstellbar ist.

Der Querarm 30 erstreckt sich entlang einer senkrecht zur Längsachse C verlaufenden Achse E und ist um die Achse C schwenkbar. Somit stellt die Achse C eine Translationsachse für das Quersegment 27 und gleichzeitig eine Schwenkachse D für das Quersegment 27 dar. An seinem dem Befestigungspunkt 28 gegenüberliegenden Ende des Querarms 30 ist ein Effektor 32 angebracht. Der Effektor 32 ist in der in Figur 1 dargestellten Ausführungsform als Hebeeinrichtung 34 ausgebildet und dazu ausgelegt, eine Motorhaube 36 oder eine andere Haube wie beispielsweise eine Heckklappe der Fahrzeugkarosserie 12 anzuheben und wieder abzusenken. Auf diese Weise wird ein Innenraum 38 der Fahrzeugkarosserie 12 für einen Behandlungsvorgang wie beispielsweise eine Lackierung oder eine Beschichtung zugänglich.

Der Effektor 32 ist an einem Befestigungspunkt 38 des Querarms 30 angebracht und gegenüber dem Befestigungspunkt 28 des Querarms 28 entlang der Achse E verschiebbar. So kann die relative Position des Effektors 32 bezogen auf die Längsachse X des zu behandelnden Gegenstands - hier der Fahrzeugkarosserie 12 - eingestellt werden. Gleichzeitig ist der Effektor 32 um die Achse E dreh- bzw. schwenkbar, so dass diese Achse auch als Drehachse F fungiert. Eine solche Drehbewegung um die Drehachse F ermöglicht eine mit der Drehbewegung um die Achse B und beispielsweise einer Hebebewegung entlang der Achse C abgestimmte und fein kontrollierbare Öffnungsbewegung der Motorhaube 36.

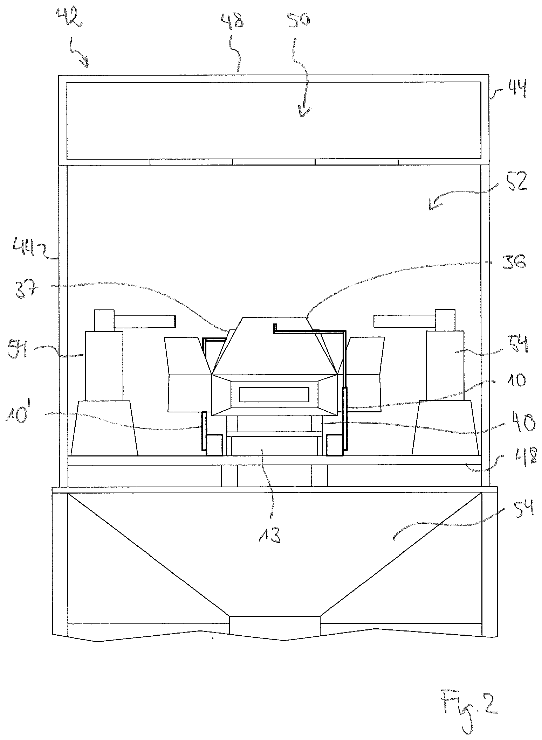

Figur 2 zeigt in einer schematischen Schnittdarstellung den Handhabungsroboter 10 der Figur 2 in einer teilweise geschnittenen Frontalansicht mit einer alternativen Fördertechnik. Anstatt einer Fördertechnik mittels einer Elektrobodenbahn, welche die Fahrzeugkarosserie direkt aufnimmt, ist in der in Figur 2 gezeigten Ausführungsform ein Warenträger in Form eines Skids 40 dargestellt. In der in Figur 2 gezeigten teilweise geschnittenen Frontalansicht ist der Aufbau einer Lackierkabine 42 dargestellt. Soweit gleiche oder vergleichbare Merkmale zu der Figur 1 vorliegen, werden bei der Beschreibung der Ausführungsform der Figur 2 gleiche Bezugszeichen verwendet.

Die Lackierkabine 40 weist einen bekannten Aufbau auf, der Außenwände 44, einen Lackierkabinenboden 46 und eine Decke 48 umfasst. Über ein Luftplenum 50 strömt gereinigte und klimatisierte Luft oben in die Lackierkabine 42 ein, durchströmt den Innenraum 52 der Lackierkabine 42 von oben nach unten und nimmt dabei freigesetzte Lackpartikel oder Lösungsmittel auf und verlässt den Innenraum 52 über den Kabinenboden 46. Die so mit unerwünschten Stoffen beladene Luft wird über eine Reinigungsvorrichtung gesammelt, gereinigt und gegebenenfalls wieder dem Lackierkabineninnenraum 52 über das Luftplenum 50 zugeführt.

Innerhalb der Lackierkabine 50 sind in der in Figur 2 gezeigten Ausführungsform Mehrachsroboter 54 angeordnet, welche zur Abgabe von Beschichtungsmaterial wie beispielsweise einem Lack ausgelegt sind. Alternativ können natürlich auch andere Beschichtungsmaterialien abgebbar sein.

Bei der in Figur 2 gezeigten Ausführungsform sind zwei Handhabungsroboter 10, 10' gezeigt. Während der Handhabungsroboter 10 für das Öffnen der Motorhaube 36 ausgelegt ist, dient der Handhabungsroboter 10' für das Öffnen der Heckklappe 37. Die Handhabungsroboter 10, 10' sind, wie aus Figur 2 gut ersichtlich ist, direkt seitlich neben der Fördertechnik 13 und unterhalb der Fahrzeugkarosserie 12 angeordnet. Dies ermöglicht eine maximale Bewegungsfreiheit für die Mehrachsroboter 54.

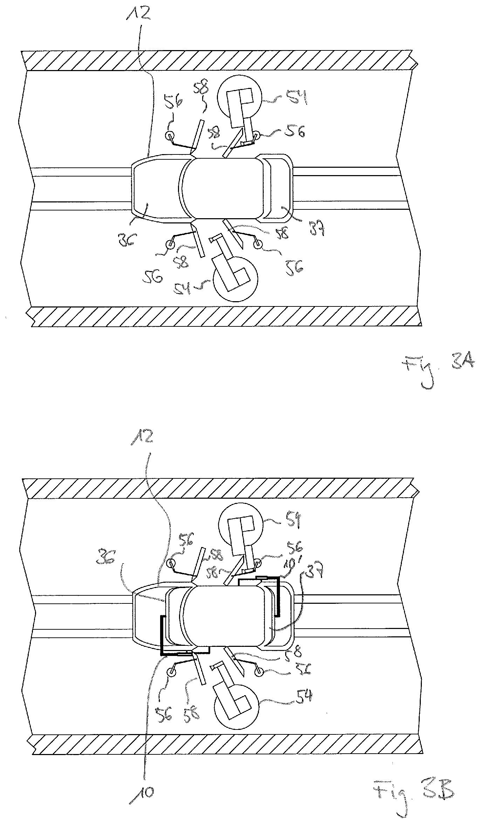

Die Figuren 3A und 3B zeigen in einer schematischen Darstellung eine teilweise geschnittene Draufsicht einer Lackierkabine mit einem Handhabungsroboter 10 in einer Parkstellung bzw. in einer aktiven Stellung. In Figur 3A sind die Handhabungsroboter 10, 10' in einer Parkstellung gezeigt und dementsprechend in der Draufsicht von der Fahrzeugkarosserie 12 verdeckt. In dieser Parkstellung sind die Handhabungsroboter 10, 10' vor Overspray, der während einer Beschichtung der Fahrzeugkarosserie 12 entsteht, geschützt. In Figur 3B sind die Handhabungsroboter 10, 10' in einer aktiven Stellung und haben die Motorhaube 36 sowie die Heckklappe 37 geöffnet.

In den Figuren 3A, B sind neben den Mehrachsrobotern 54 auch Türöffnungsroboter 56 dargestellt. Die Türöffnungsroboter 56 dienen zum Öffnen, Offenhalten und gegebenenfalls wieder Schließen der seitlichen Karosserietüren 58. Es ist in der Figur 3B gut ersichtlich, dass selbst bei einem aktiven Einsatz der Türöffnungsroboter 56 aufgrund des schmalen und einfachen Aufbaus der Handhabungsroboter 10, 10' diese gleichzeitig in einer aktiven Stellung die Motorhaube 36 oder/und die Heckklappe 37 offenhalten können.

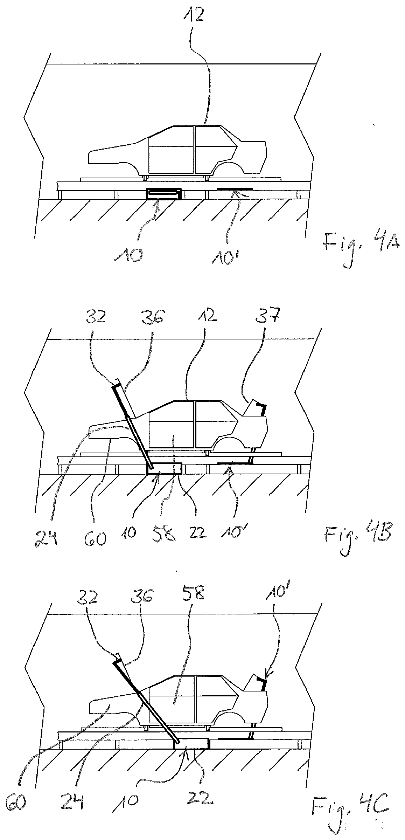

Die Figuren 4A - 4C zeigen in einer schematischen Darstellung eine teilweise geschnittene Seitenansicht der Lackierkabine der Figuren 3A und 3B mit verschiedenen Stellungen der Handhabungsroboter 10, 10'.

Figur 4A zeigt die Handhabungsroboter 10, 10' in der bereits erwähnten Parkstellung. Sie sind in dieser Stellung unterhalb der Fahrzeugkarosserie 12 verdeckt und damit vor einem mit Overspray beladenen Luftstrom, der vertikal von oben nach unten verläuft, geschützt. Gleichzeitig besteht ein maximaler Bewegungsraum für die in den Figuren 4A-4C nicht dargestellten Mehrachsroboter 54. Um die Handhabungsroboter 10, 10' noch weiter vor einer Verschmutzung durch Beschichtungsmaterial zu schützen, können die Handhabungsroboter 10, 10' in oder unterhalb einer Schutzeinhausung (nicht abgebildet) in der Parkstellung angeordnet sein. Bei der Schutzeinhausung kann es sich beispielsweise um eine Art Schublade handeln, in welcher der Handhabungsroboter 10, 10' bei Nichtbenützung untergebracht und vor Verschmutzung geschützt sein kann.

Figur 4B zeigt die Handhabungsroboter 10, 10' in einer ersten aktiven Stellung, in welcher die Handhabungsroboter 10, 10' die Motorhaube 36 und die Heckklappe 37 in einer geöffneten Stellung halten, um den über die Motorhaube 36 und die Heckklappe 37 zugänglichen Innenraum der Fahrzeugkarosserie 12 beispielsweise für eine Behandlung wie beispielsweise eine Lackierung durch die Mehrachsroboter 54 zugänglich zu machen.

Wie aus der Seitenansicht der Figur 4B gut erkennbar ist, bedeckt in dieser ersten aktiven Stellung der jeweilige Handhabungsroboter 10, 10' einen Teil der seitlichen Fahrzeugkarosserie 12. In der Stellung der Figur 4B ist die bei dem Handhabungsroboter 10 beispielsweise der vordere Kotflügel 60. Gleichzeitig ist aber die seitliche Karosserietür 58 unverdeckt. Es besteht in dieser Stellung des Handhabungsroboters 10 folglich für den Mehrachsroboter 54 die Möglichkeit, die beispielsweise nicht geöffnete seitliche Karosserietür 58 zu beschichten.

Figur 4C zeigt eine weitere aktive Stellung des Handhabungsroboters 10, die sich von der Stellung unterscheidet, die in Figur 4B gezeigt ist. In der in der Figur 4C gezeigten Stellung befindet sich der Effektor 32 und mit ihm die Motorhaube 36 in der gleichen Stellung wie in Figur 4B. Allerdings hat sich die Stellung der Basis 22 verändert. Diese hat sich im Vergleich zu der in der Figur 4B gezeigten Stellung verändert. Konkret hat sich die Basis 22 weiter nach hinten bewegt. Entsprechend steht der Manipulatorarm 24 in einem anderen Winkel und überdeckt einen Teil der Karosserietüre 58, gibt aber folglich einen bisher überdeckten Teil des Kotflügels 60 frei, der nun beschichtbar ist.

Die Erfindung bietet somit einen Handhabungsroboter zum Öffnen, Halten und Schließen von Klappen wie zum Beispiel einer Fronthaube oder einer Heckklappe einer Fahrzeugkarosserie bei der Karosserieinnenlackierung. Die Kinematik besteht aus einfachen, gewichtsoptimierten (CFK/GFK) linearen und rotierenden Achsen (minimal 3 Achsen).

Der Handhabungsroboter könnte auch auf einer externen Linearachse mitfahrend sein (Linetracking). Es wird für einen derartigen Handhabungsroboter eine einfache Kinematik benötigt, die dementsprechend auch nur einen geringen Programmieraufwand benötigt. Das entsprechende Steuerungskonzept ist ebenfalls deutlich einfacher. Es ergibt sich durch den einfachen Aufbau ein geringerer Platzbedarf und eine minimierte Störkontur in der Lackierkabine und somit eine größere Kollisionsfreiheit für den Lackierroboter. Die Verschmutzungsgefahr für die Fahrzeugkarosserie ist im Vergleich zu einem hängenden Handhabungsroboter deutlich reduziert. Durch die Unterbringung des Handhabungsroboters 10 neben/unterhalb des zu beschichtenden Gegenstands entsteht weniger Sinkluftverwirbelung in der Kabine.

Es ist der Einsatz einer Leichtbauweise durch Verwendung von GFK/CFK möglich.

Es ist insgesamt eine Kostenreduzierung möglich, da keine Lackierroboter für Handhabungsaufgaben benötigt werden.

## Patentansprüche

1. Handhabungsroboter (10, 10') für eine Beschichtungskabine zur Beschichtung von Gegenständen wie Fahrzeugkarosserien (12) oder Fahrzeugbauteile,
a) wobei die Beschichtungskabine eine Fördertechnik für einen Transport der zu beschichtenden Gegenstände aufweist,
b) wobei der Handhabungsroboter (10, 10') eine bewegbare Basis (22), einen Effektor (32) sowie mindestens drei Bewegungsachsen (A, B, C) aufweist, wobei eine erste Achse (A) als Translationsachse an der Basis im Bereich der Fördertechnik (13) angeordnet ist und eine zweite Achse (B) als Rotationsachse und eine dritte Achse als Translationsachse (C) zwischen der Basis (22) und dem Effektor (32) angeordnet sind.

2. Handhabungsroboter nach Anspruch 1, wobei der Handhabungsroboter (10, 10') so ausgelegt ist, dass Bewegungen entlang der ersten Achse (A), um die zweite Achse (B) und entlang der dritten Achse (C) so koordinierbar sind, dass bezüglich des Effektors (32) eine Bewegung entlang der ersten Achse (A) durch Bewegungen um die zweite Achse (B) und entlang der dritten Achse (C) kompensierbar sind.

3. Handhabungsroboter nach einem der vorhergehenden Ansprüche, wobei die zweite Achse (B) an der Basis (22) angeordnet ist.

4. Handhabungsroboter nach einem der vorhergehenden Ansprüche, wobei der Effektor (32) zum Öffnen oder/und Offenhalten einer Haube (36, 37) einer Fahrzeugkarosserie (12) ausgelegt ist.

5. Handhabungsroboter nach einem der vorhergehenden Ansprüche, wobei der Handhabungsroboter (10, 10') in Förderrichtung (20) gesehen neben dem zu beschichtenden Gegenstand angeordnet ist.

6. Handhabungsroboter nach einem der vorhergehenden Ansprüche, wobei die erste Achse (A) entlang der Förderrichtung (20) und/oder die zweite Achse (B)senkrecht zu der Förderrichtung (20) angeordnet sind.

7. Handhabungsroboter nach einem der vorhergehenden Ansprüche, wobei im Bereich der Fördertechnik (13) eine Schutzeinhausung für den Handhabungsroboter (10, 10') vorgesehen ist, in welche der Handhabungsroboter (10, 10') bewegbar ist.

8. Verfahren zur Ansteuerung eines Handhabungsroboters nach einem der vorhergehenden Ansprüche, mit den Schritten:
a) Durchführen einer Bewegung des Handhabungsroboters entlang der ersten Achse;
b) Kompensieren der Bewegung des Handhabungsroboters entlang der ersten Achse mittels Durchführens einer Bewegung des Handhabungsroboters um die zweite Achse.

9. Verfahren zur Beschichtung von Gegenständen mit einem Handhabungsroboter nach einem der Ansprüche 1 bis 7.

10. Beschichtungsanlage mit einem Handhabungsroboter nach einem der Ansprüche 1 bis 7.
